# EUROPEAN PATENT SPECIFICATION

(11) **EP 0 402 758 B1**
(45) Date of publication and mention of the grant of the patent: **15.04.1998**
(21) Application number: 90110737.5
(22) Date of filing: 06.06.1990
(51) Int. Cl.: G06F 15/02, G07F 7/10

(54) **Portable electronic device having versatile program storage**
Tragbares elektronisches Gerät mit vielseitiger Programmspeicherung
Appareil électronique portable avec mémorisation diverse de programme

(30) Priority: 12.06.1989 JP 148995/89
(43) Date of publication of application: 19.12.1990
(73) Proprietor: KABUSHIKI KAISHA TOSHIBA, Kawasaki-shi, Kanagawa-ken 210 (JP)
(72) Inventor: Nara, Seietsu, C/o Intellectual Property Division, Minato-ku, Tokyo 105 (JP)
(74) Representative: Blumbach, Kramer & Partner GbR

(56) References cited:
- EP-A- 0 218 176
- EP-A- 0 261 030
- EP-A- 0 292 248
- US-A- 4 211 919
- PATENT ABSTRACTS OF JAPAN vol. 13, no. 370 (P-920)17 August 1989

## Description

The present invention relates to a multifunctional portable electronic device such as an IC card, which incorporates, e.g., a CPU, a data memory, a built-in battery, and the like, and is solely used to provide an electronic calculator function, a time display function, and the like, and is inserted in a terminal in use.

Conventionally, multifunctional IC cards have been developed. An IC card of this type incorporates a CPU (control element), a data memory, and the like, has a keyboard, a display unit, and the like, and is solely used to provide an electronic calculator function, a time display function, or the like, or is inserted in a terminal in use. The CPU, the data memory, and the like are incorporated as an LSI.

In an IC card of this type, a program is examined according to specifications presented by a customer, and thereafter, programming, debugging, tests, and the like are performed. Then, the manufacture of a new LSI is started from design of a mask. In this case, basic functions are stored in a program memory comprising a mask ROM.

For this reason, every time specifications are changed or a new function is added, an LSI must be manufactured, resulting in high cost of the LSI, i.e., an IC card. In addition, a development period (mainly for a program) is undesirably prolonged.

EP-A-0 292 248 discloses a portable electronic device in accordance with the preamble of claim 1. This known portable electronic device is provided in the form of a smart card containing a data memory, an applications program memory and an operating system memory. Application programs can be loaded into a portion of the applications program memory and may be altered in case the use of the card is changed.

EP-A-0 261 030 discloses a portable electronic device in the form of an IC card wherein an authentication code of a service supplier is stored in the IC card on issuance. When a service is to be added, a service supplier is authenticated and, thereafter, acquisition of a position of a data field area within a predetermined size of a data field area is permitted. Hence, an unauthorized access may be prevented.

It is an object of the present invention to provide a portable electronic device which can prevent an increase in cost, and can shorten a development period.

A portable electronic device of the present invention comprises the features mentioned in claim 1.

This invention can be more fully understood from the following detailed description when taken in conjunction with the accompanying drawings, in which:

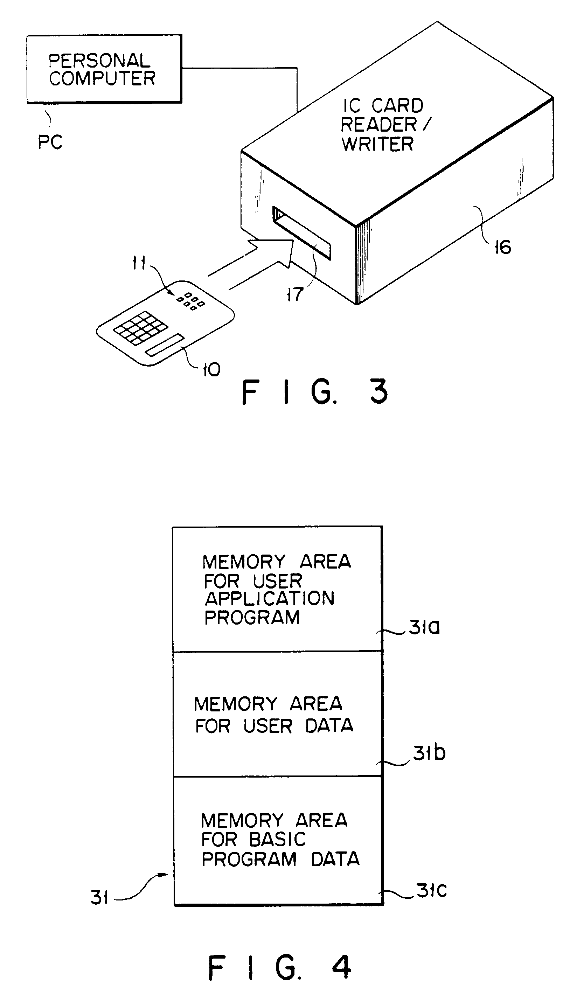

Figs. 1 to 6 are views for explaining an embodiment of the present invention, in which:

Fig. 1 is a schematic block diagram showing an arrangement of an electrical circuit of an IC card;
Fig. 2 is a plan view showing an arrangement of the IC card;
Fig. 3 is a perspective view showing a terminal for the IC card;
Fig. 4 shows a memory map of a data memory;
Fig. 5 is a circuit diagram showing an arrangement of a memory controller; and
Fig. 6 shows a data format including an approval code.

An embodiment of the present invention will be described below with reference to the accompanying drawings.

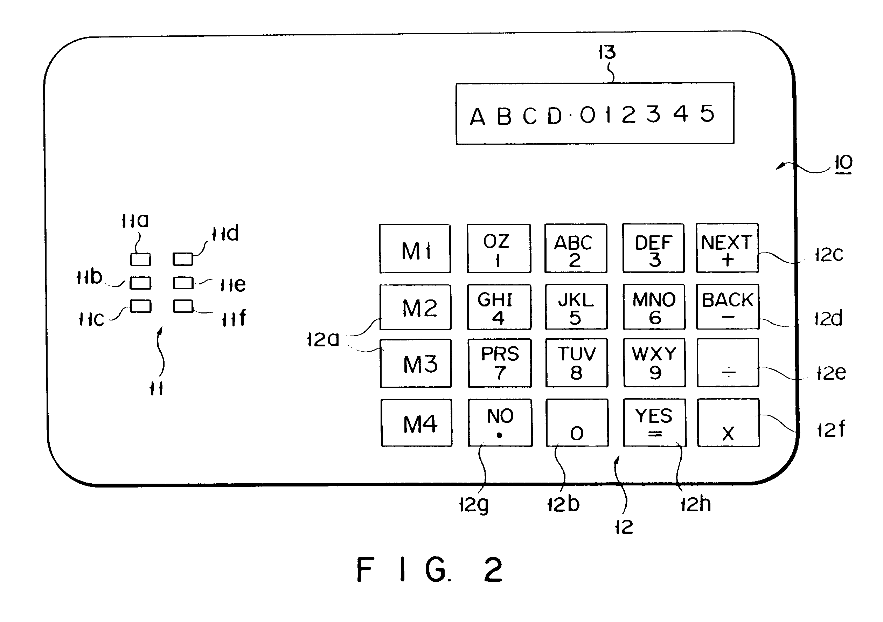

In Fig. 2, reference numeral 10 denotes an IC card as a portable electronic device, which is a multifunctional IC card having various functions. For example, IC card 10 has an on-line function used with a terminal (not shown), an off-line function in which IC card 10 is solely operated, and a standby state wherein only a timepiece function is enabled.

The off-line function includes an electronic calculator mode in which the card can be used as an electronic calculator, a clock mode for displaying a time of a timepiece for a user, an electronic note (memorandum) mode in which addresses, names, telephone numbers, and the like are registered or read out, and a purchase mode in which IC card 10 is utilized as a plurality of kinds of credit cards. Thus, IC card 10 can be solely used in these modes.

In the purchase mode, IC card 10 stores a balance, a valid date, purchase records, and the like. Upon every purchase, a purchase amount is subtracted from the balance stored in IC card 10, and purchase information is recorded. When the balance in IC card 10 becomes zero or the valid date expires, a secret code is issued from a contract bank, thus updating the contents of the IC card.

Contacts portion 11 arranged at a position designated by the standards of a card, keyboard 12 including 20 keys, and display unit 13 arranged on a surface portion above keyboard 12 and formed of a liquid crystal element are arranged on the surface of IC card 10.

Contacts portion 11 includes a plurality of terminals 11a to 11f, i.e., an operation power supply voltage (Vcc, +5 V) terminal, an EEPROM write power supply voltage terminal (Vpp, +12 V to +24 V), a ground terminal, a clock signal terminal, a reset signal terminal, and data I/O terminals.

Keyboard 12 includes selection keys (M1, M2, M3, and M4) 12a for selecting processing operations corresponding to kinds of card (e.g., various credit cards, cash cards, and the like), ten-key pad 12b, four-arithmetic rule keys, that is, addition (+) key 12c, subtraction (-) key 12d, division (ö) key 12e, multiplication (x) key 12f, decimal point (.) key 12g, and equal (=) key 12h.

Addition key 12c is used as a NEXT key, i.e., a mode selection key for selecting a mode during a display of a date and time in the off-line mode. Subtraction key 12d is used as a BACK key, i.e., a key for returning a display state of display unit 13 to a previous state. Multiplication key 12f is used as a start key. Decimal point key 12g is used as a NO key or an end key. Equal key 12h is used as a YES key or a power-on key.

When equal key 12h is depressed as the power-on key, a CPU (to be described later) is released from a HALT state, and causes display unit 13 to display time and date as an operation start message.

In this state, when keys of ten-key pad 12b are depressed, IC card 10 is set in the electronic calculator mode, and four arithmetic operations can be performed.

Addition key 12c as the mode selection key is used as a key for advancing the display state of display unit 13 which is displaying date and time to another mode. Every time addition key 12c is depressed, the electronic memorandum, time set, date set, purchase transaction modes, and the like are displayed on display unit 13 as a menu. When these modes are executed, equal key 12h is depressed as the YES key. Thus, the selected mode can be executed.

Display unit 13 is a 16-digit display, each digit of which has a 5 × 7 dot matrix.

Fig. 3 shows an outer appearance of IC card reader/writer 16 connected to a terminal such as personal computer PC dealing with IC card 10. More specifically, personal computer PC electrically connected to contacts portion 11 of IC card 10 inserted from card slot 17 reads or writes data from or in a memory of IC card 10.

IC card reader/writer 16 is connected to a main body of personal computer PC through a cable.

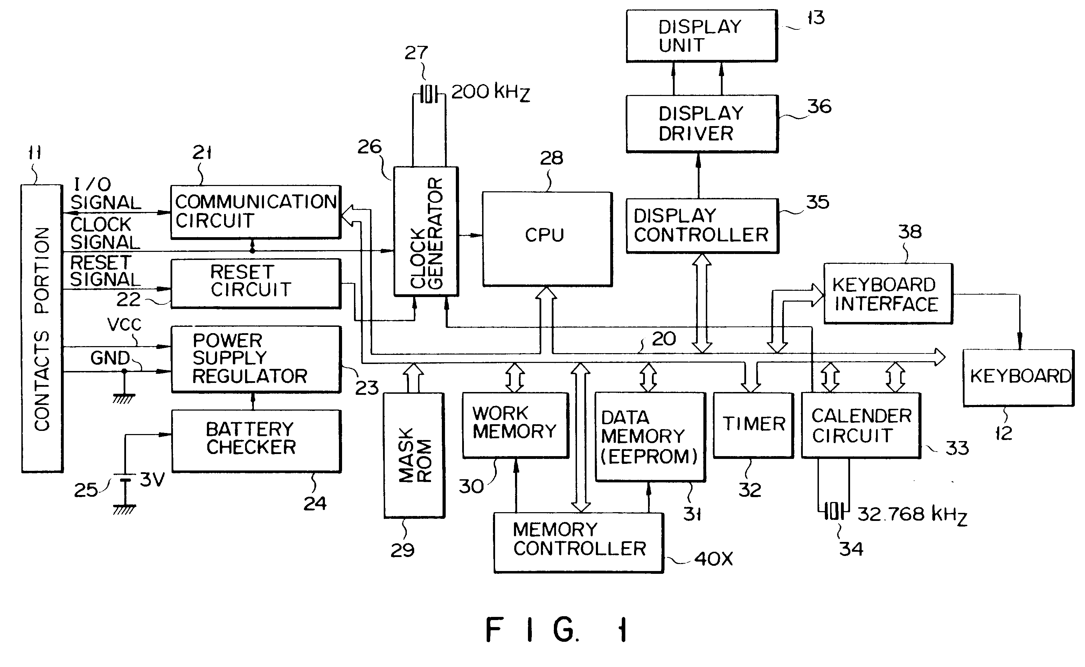

An electrical circuit of IC card 10 (CMOS) is arranged, as shown in Fig. 1. More specifically, the electrical circuit comprises contacts portion 11, communication circuit 21, reset circuit 22, power supply regulator 23, internal battery (built-in battery) 25 of, e.g., 3 V, battery checker 24 for checking if a voltage value of built-in battery 25 is equal to or higher than a rated value, clock controller 26, oscillator 27, as an arithmetic clock quartz oscillator, for outputting a signal at an oscillation frequency of 200 kHz (high-speed clock), control CPU (central processing unit) 28, mask ROM 29 for storing a basic program and data necessary for it, work memory 30 for executing a program, data memory 31, comprising an EEPROM, for storing an ID number, data, and the like, and a user program and the basic program, memory controller 40X for controlling mask ROM 29 and data memory 31, timer 32 used for measuring time during a processing operation, calender circuit 33, oscillator 34, as a fundamental clock quartz oscillator, for outputting a signal at an oscillation frequency of 32.768 kHz (low-speed clock), display controller 35, display driver 36 for driving display unit 13, and keyboard interface 38 as a key input circuit for keyboard 12.

Communication circuit 21, CPU 28, ROM 29, memory controller 40X, work memory 30, data memory 31, timer 32, calender circuit 33, display controller 35, and keyboard interface 38 are connected to each other through data bus 20.

In a reception mode, communication circuit 21 converts serial I/O signals supplied, through contacts portion 11, from IC card reader/writer 16 connected to terminal PC into parallel data, and outputs it onto data bus 20. In a transmission mode, circuit 21 converts parallel data supplied from data bus 20 into serial I/O signals, and outputs them to terminal PC through contacts portion 11. In this case, the format content of conversion is determined by software of terminal PC and specifications of IC card 10.

Reset circuit 22 generates a reset signal to start CPU 28 when the on-line mode is set.

Power supply regulator 23 switches a drive mode from one by built-in battery 25 to the other by an external power supply after the lapse of a predetermined period of time from the beginning of the on-line mode. When the off-line mode is set, i.e., an external voltage is decreased below a predetermined value, regulator 23 switches the drive mode from one by the external power supply to the other by built-in battery 25.

Clock controller 26 appropriately switches the low- and high-speed clocks in the off-line mode in which a card operation is performed by built-in battery 25. For the purpose of power saving, after execution of a HALT command, controller 26 stops oscillator 27 which outputs a signal of an oscillation frequency of 200 kHz (high-speed clock), thereby stopping supply of a clock to CPU 28. Then, controller 26 causes IC card 10 to wait in a perfect HALT state. Upon execution of the reset and HALT commands, clock controller 26 stops generation of the high-speed clock, and basically selects a timepiece low-speed clock (32.768 kHz).

The basic program stored in mask ROM 29 includes a credit function, a drive program for I/O control, a calender function, and various other subroutine functions.

Data memory 31 has memory area 31a for storing a user application program, memory area 31b for storing user data, and memory area 31c for storing basic program data (important data, e.g., amounts, an access approval code, and the like).

The user application program is provided with the same approval code as an approval code (access approval key) set upon manufacture of an IC card when the program is created. When data read/write access to basic program data memory area 31c is performed, the approval code is read out from memory area 31c, and is output to memory controller 40X.

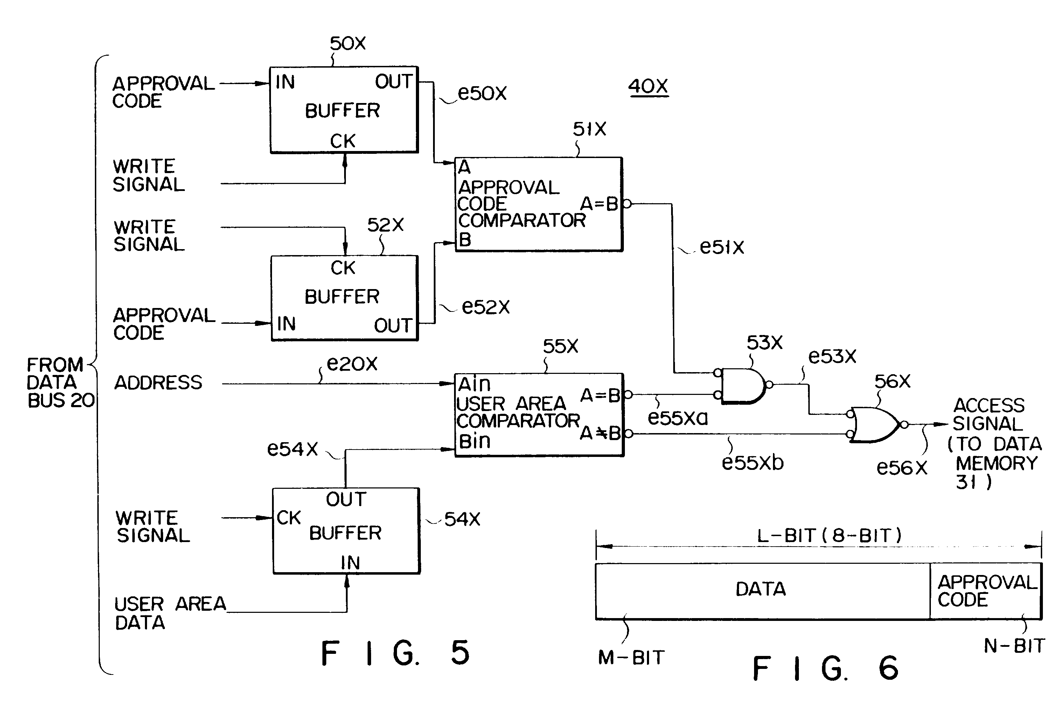

Read/write access to area 31c is performed in response to an L-bit (e.g., 8-bit) access command, as shown in Fig. 6. Of this command, upper M bits are used as address data for indicating a start address of the basic program, and lower N bits are used as the approval code.

The basic program stored in mask ROM 29 is loaded before the manufacture of an LSI. The user application program stored in data memory 31 is loaded from the terminal as part of card issuance processing at an issuer upon completion of the manufacture of a card.

Memory controller 40X monitors operations of mask ROM 29 and data memory 31 and controls data read/write access so as to prevent basic data from being destroyed by bugs in software or noise or an illegal program from entering a user area (to prevent the basic program from being illegally modified). When the basic program is illegally modified, for example, the balance of the bank account of the card is not decreased although a user makes a purchase using IC card 10 as a cash card.

When the same approval code as that set in advance is supplied by the application program upon access to basic program data memory area 31c in data memory 31, memory controller 40X approves data read/write access to user data memory area 31b. When the same approval code is not supplied by the application program, controller 40X disapproves data read/write access to user data memory area 31b.

Calender circuit 33 has a timepiece which can be desirably set and updated by a card holder, and a transaction timepiece in which a world standard time is set upon issuance of the card and cannot be changed.

Display controller 35 converts display data supplied from CPU 28 into a character pattern using a character generator (not shown) comprising an internal ROM, and displays the character pattern on display unit 13 using display driver 36.

Keyboard interface 38 converts an input operation at keyboard 12 into a corresponding key input signal, and outputs it to CPU 28.

Memory controller 40X is arranged, as shown in Fig. 5. More specifically, the approval code which is set in advance upon manufacture of a card (lower N bits of the L-bit data shown in Fig. 6) is stored in approval code buffer 50X. Approval code buffer 50X stores an approval code supplied from CPU 28 through data bus 20 upon manufacture of the card in accordance with a write signal. Stored approval code e50X is supplied to one input terminal A of approval code comparator 51X.

Controller 40X also includes approval inquiry buffer 52X in which the approval code is set in the use of card 10. Approval inquiry buffer 52X stores an approval code supplied from CPU 28 through data bus 20 in accordance with a write signal. Stored approval code e52X is supplied to the other input terminal B of approval code comparator 51X.

Approval code comparator 51X compares approval code e50X from approval code buffer 50X and approval code e52X from approval inquiry buffer 52X to determine whether or not these codes coincide with each other. When a coincidence between the two codes is detected, coincidence output e51X is supplied to one terminal of access approval gate 53X.

Data indicating a user area, which is set in advance upon manufacture of the card (upper M bits of the L-bit data shown in Fig. 6), i.e., the start address of memory area 31c in data memory 31 is stored in user area buffer 54X. User area buffer 54X stores user area data supplied from CPU 28 through data bus 20 upon manufacture of the card in accordance with a write signal. Data e54X stored in buffer 54X is supplied to one input terminal Bin of user area comparator 55X. The other input terminal Ain of user area comparator 55X receives presently processed address data e20X supplied from CPU 28 through data bus 20.

User area comparator 55X compares address data e20X supplied from CPU 28 and user area data e54X supplied from user area buffer 54X. When an address to be accessed of memory 31 falls within a user area (memory area 31c), coincidence signal e55Xa is output from output terminal A=B of comparator 55X. When the address falls outside the user area (memory area 31c), noncoincidence signal e55Xb is output from output terminal A≠B of comparator 55X.

Coincidence signal e55Xa output from output terminal A=B of user area comparator 55 is supplied to the other terminal of access approval gate 53X. Output e53X from access approval gate 53X is supplied to one terminal of access approval gate 56X. The other terminal of access approval gate 56X receives noncoincidence signal e55Xb output from output terminal A≠B of user area comparator 55X. Output e56X from access approval gate 56X is output to data memory 31 as an access signal.

When no coincidence signal e51X as an access approval signal is supplied from approval code comparator 51X to access approval gate 53X (e51X = "1"), and when coincidence signal e55Xa (= "0") is output from output terminal A=B of user area comparator 55X, output e53X from gate 53X goes to level "1", and noncoincidence signal e55Xb of comparator 55X goes to level "1". Thus, access signal e56X output from access approval gate 56X is not enabled (e56X = "1"). When no coincidence signal e51X as an access approval signal is supplied from approval code comparator 51X to access approval gate 53X (e51X = "1") and when noncoincidence signal e55Xb (= "0") is output from output terminal A≠B of user area comparator 55X, access signal e56X output from access approval gate 56X is enabled (e56X = "0").

While coincidence signal e51X (= "0") as the access approval signal is supplied from approval code comparator 51X to access approval gate 53X, when coincidence signal e55Xa (= "0") is output from output terminal A=B of user area comparator 55X, or noncoincidence signal e55Xb (= "0") is output from output terminal A≠B of user area comparator 55X, access signal e56X output from access approval gate 56X is enabled (e56X = "0").

Data memory 31 receives an address for accessing this memory, a read signal, a write signal, and write data from CPU 28 through data bus 20.

The operation of this arrangement will be described below. Assume that an approval code and data indicating a user area (start address of basic program data memory area 31c) are set by a manufacture upon manufacture of a card. The data format of the approval code (N bits) and user area data (M bits) can be represented by L-bit (8- or 16-bit) data, as shown in Fig. 6. CPU 28 supplies the approval code set by the L-bit data and a write signal to approval code buffer 50X in memory controller 40X through data bus 20, and supplies the set user area data and a write signal to user area buffer 54X in memory controller 40X through data bus 20. Therefore, upon manufacture of IC card 10, the approval code (N bits in Fig. 6) is stored in approval code buffer 50X, and the user area data (M bits in Fig. 6) is stored in user area buffer 54X.

Upon completion of the manufacture of IC card 10 storing the data in this manner, a user application program is loaded as part of card issuance processing from terminal PC to card 10 at an issuer side.

When a user uses IC card 10 after it is issued, and when basic program data memory area 31c in data memory 31 is to be accessed, memory controller 40X enables an access signal to data memory 31 only when the same approval code as that set upon manufacture of the card is obtained. When the same approval code as that set upon manufacture of the card cannot be obtained, memory controller 40X does not enable the access signal to data memory 31. Thus, when memory area 31c is accessed by a program created by a legal user, the access is approved. However, when memory area 31c is accessed by a program which is created not by a legal user, access is disapproved.

More specifically, when memory area 31c is to be accessed, CPU 28 reads out the approval code from memory area 31c by the user application program, and outputs it to approval inquiry buffer 52X in memory controller 40X. Approval inquiry buffer 52X stores the input approval code, and outputs it to approval code comparator 51X.

Thus, approval code comparator 51X compares the approval code which is set in advance upon manufacture of the card and is supplied from approval code buffer 50X and the approval code supplied from approval inquiry buffer 52X. Only when a comparison result indicates a coincidence between the two codes, coincidence output e55Xa is output to access approval gate 53X.

CPU 28 outputs an address to be accessed to user area comparator 55X in memory controller 40X through data bus 20. User area comparator 55X compares the address supplied from CPU 28, and the user area data which is set in advance in user area buffer 54X upon manufacture of the card. When the address to be accessed falls within the user area (memory area 31c), comparator 55X outputs coincidence signal e55Xa from output terminal A=B; when the address falls outside the user area (memory area 31c), it outputs noncoincidence signal e55Xb from output terminal A≠B.

Therefore, when no coincidence signal e51X as an access approval signal is supplied from approval code comparator 51X to access approval gate 53X (e51X = "1"), and when coincidence signal e55Xa (= "0") is output from user area comparator 55X (e55Xa = "0", e55Xb = "1"), the access signal output from access approval gate 56X is not enabled (e56X = "1"). When no coincidence signal e51X as an access approval signal is supplied from approval code comparator 51X to access approval gate 53X (e51X = "1"), and when noncoincidence signal e55Xb is output from output terminal A≠B of user area comparator 55X (e55Xb = "0"), access signal e56X output from access approval gate 56X is enabled (e56X = "0").

When coincidence signal e51X as an access approval signal is supplied from approval code comparator 51X to access approval gate 53X (e51X = "0"), and when coincidence signal e55Xa is output from user area comparator 55X (e55Xa = "0"), or when noncoincidence signal e55Xb is output from user area comparator 55X (e55Xb = "0"), access signal e56X output from access approval gate 56X is enabled (e56X = "0").

When access signal e56X output from access approval gate 56X of memory controller 40X is enabled (e56X = "0"), data can be written in or read out from an address of memory 31 supplied from CPU 28 at that time.

As described above, a memory area for storing a user program and basic program data is allocated on a rewritable data memory. In a data read or write mode, when the same approval code as that set in advance is supplied upon processing of the program, data read or write access to the basic program data memory area is approved.

Thus, there can be provided a highly reliable card which can prevent basic data from being destroyed and illegal software from entering by monitoring a user program operation without preparing a new LSI every time specifications are modified.

More specifically, the basic program data is stored in the rewritable memory. Since a coincidence of approval codes is checked before an area for the basic program data is released, the memory can be prevented from being accidentally released to destroy the basic function of the card.

In the above embodiment, an IC card is used. However, the present invention is not limited to this. The present invention can be applied to various other portable electronic devices as long as they have a data memory and a control element, and can selectively perform I/Os from an external device. The electronic device need not always have a card-like shape but may have other shapes such as a rod-like shape. Battery 25 may be a solar cell.

As described above, according to the present invention, a portable electronic device which can prevent an increase in cost and can shorten a development period can be provided.

## Claims

1. A portable electronic device comprising:
a data processing unit (28) having a function of basic processing of the device and a function of user application processing;
memory means (29 to 31) having a first memory area (29) which is inhibited from writing, for storing a program for executing the basic processing, and a rewritable second memory area (31) comprising a storage area (31a, 31b) for storing a user application program and data of the user application program, and a user area (31c) for storing basic program data; and
first means (50X) for storing a predetermined access approval code;
characterized by
second means (54X) for storing data indicating said user area (31c);
third means (55X) for detecting whether presently supplied address data (e20X) of an access command matches said data indicating said user area (31c) stored in said second means (54X);
means (40X; 51X/53X) for approving read/write access to said second memory area (31) when having received an access command to access the second memory area (31) being a predetermined access command including an access approval code matching the one stored in said first means (50X) or when, in response to said third means (55X), the presently supplied address data of said access command does not match said data indicating said user area stored in said second means (54X); and
means (40X) for disapproving read/write access to said second memory area (31) when the above conditions are not met.

2. A device according to claim 1, characterized in that the access command includes the predetermined access approval code and start address data of the program for executing the basic processing function.

3. A device according to claim 2, characterized in that control means (40X) includes:
a first approval code buffer (50X) for storing an approval code set in advance in the device;
a second approval code buffer (52X) for storing the predetermined access code when the device is used;
code coincidence detection means (51X) for comparing the approval code stored in said first approval code buffer and the approval code stored in said second approval code buffer and for, when the two approval codes coincide with each other, outputting a code coincidence signal;
a user area buffer (54X) for storing the start address data when the device is used;
address coincidence detection means (55X) for comparing the start address data stored in said user area buffer and address data output from said data processing unit, for, when the two address data coincide with each other, outputting an address coincidence signal, and for, when the two address data do not coincide with each other, outputting an address noncoincidence signal; and
a logic circuit (53X, 56X) for, when the code coincidence signal and the address coincidence signal are output, approving read/write access to said second memory area, and for, when the code coincidence signal is not output, disapproving read/write access to said second memory area when the address coincidence signal is output.

4. A device according to claim 2, characterized in that control means (40X) includes:
a first approval code buffer (50X) for storing an approval code set in advance in the device;
a second approval code buffer (52X) for storing the predetermined access code when the device is used;
code coincidence detection means (51X) for comparing the approval code stored in said first approval code buffer and the approval code stored in said second approval code buffer and for, when the two approval codes coincide with each other, outputting a code coincidence signal;
an user area buffer (54X) for storing the start address data when the device is used;
address coincidence detection means (55X) for comparing the start address data stored in said user area buffer and address data output from said data processing unit (28), for, when the two address data coincide with each other, outputting an address coincidence signal, and for, when the two address data do not coincide with each other, outputting an address noncoincidence signal; and
a logic circuit (53X, 56X) for, when both the code coincidence signal and the address coincidence signal are output or when the address noncoincidence signal is output, approving read/write access to said second memory area and, for, when no code coincidence signal is output, disapproving read/write access to said second memory area even when the address coincidence signal is output.

5. A device according to claim 1, characterized in that said memory means (29 to 31) includes an electrically-erasable programmable ROM for said second memory area (31).

6. A device according to claim 5, characterized in that said electrically-erasable programmable ROM stores the user application program and a user's identification number.

7. A device according to claim 1, characterized in that said memory means (29 to 31) includes a ROM for said first memory area (29).

8. A device according to claim 7, characterized in that said ROM stores the program for executing the basic processing function, and data used when the program is executed.

9. A device according to claim 1, characterized in that said device has an on-line mode in which said device in use is connected to an external apparatus (16), and an off-line mode in which said device is solely used, and is assembled in an IC card (10) which incorporates a built-in battery (25).

10. The device according to claim 9, characterized in that the basic processing function includes a credit transaction function.

11. The device according to claim 9, characterized in that the basic processing function includes a calendar function.

12. A device according to claim 11, further comprising:
a calendar circuit (33) including a user timepiece which can be desirably set by a user, and a timepiece which can be set by an issuer of said IC card (10) but cannot desirably be set by the user.

13. A device according to claim 9, characterized in that said IC card (10) is powered by said external apparatus (16) in the on-line mode, and is powered by the built-in battery (25) in the off-line mode.

## Patentansprüche

1. Tragbares elektronisches Gerät mit
einer Datenverarbeitungseinheit (28), die eine Basisverarbeitungsfunktion des Geräts und eine Benutzeranwendungsverarbeitungsfunktion aufweist,
einer Speichereinrichtung (29 bis 31), die einen ersten Speicherbereich (29), der zum Speichern eines Programms für die Durchführung der Basisverarbeitung dient und bei dem ein Einschreiben gesperrt ist, und einen wiederbeschreibbaren zweiten Speicherbereich (31) aufweist, der einen Speicherbereich (31a, 31b) zum Speichern eines Benutzeranwendungsprogramms und von Daten des Benutzeranwendungsprogramms sowie einen Benutzerbereich (31c) zum Speichern von Basisprogrammdaten enthält, und
einer ersten Einrichtung (50X) zum Speichern eines vorbestimmten Zugriffszustimmungscodes,
**gekennzeichnet** durch
eine zweite Einrichtung (54X) zum Speichern von Daten, die den Benutzerbereich (31c) angeben,
eine dritte Einrichtung (55X) zum Erfassen, ob gegenwärtig zugeführte Adressdaten (e20X) eines Zugriffsbefehls mit den Daten übereinstimmen, die den Benutzerbereich (31c) bezeichnen und in der zweiten Einrichtung (54X) gespeichert sind,
eine Einrichtung (40X; 51X/53X) zum Gewähren des Lese/Schreib-Zugriffs zu dem zweiten Speicherbereich (31), wenn ein Zugriffsbefehl für den Zugriff zu dem zweiten Speicherbereich (31) erhalten worden ist, der ein vorbestimmter Zugriffsbefehl ist, der einen Zugriffszustimmungscode enthält, der mit dem in der ersten Einrichtung (50X) gespeicherten Zugriffszustimmungscode übereinstimmt, oder wenn, als Ergebnis der dritten Einrichtung (55X), die gegenwärtig zugeführten Adressdaten des Zugriffsbefehls nicht mit den Daten übereinstimmen, die den Benutzerbereich angeben und in der zweiten Einrichtung (54X) gespeichert sind, und
eine Einrichtung (40X) zum Verweigern des Lese/Schreib-Zugriffs zu dem zweiten Speicherbereich (31), wenn die vorstehend angegebenen Bedingungen nicht erfüllt sind.

2. Gerät nach Anspruch 1, dadurch **gekennzeichnet,** daß der Zugriffsbefehl den vorbestimmten Zugriffszustimmungscode und Startadressdaten des Programms für die Ausführung der Basisverarbeitungsfunktion enthält.

3. Gerät nach Anspruch 2, dadurch **gekennzeichnet,** daß die Steuereinrichtung (40X) enthält:
einen ersten Zustimmungscodepuffer (50X) zum Speichern eines Zustimmungscodes, der vorab in dem Gerät eingestellt ist,
einen zweiten Zustimmungscodepuffer (52X) zum Speichern des vorbestimmten Adresscodes, wenn das Gerät benutzt wird,
eine Codekoinzidenzerfassungseinrichtung (51X) zum Vergleichen des Zustimmungscodes, der in dem ersten Zustimmungscodepuffer gespeichert ist, und des Zustimmungscodes, der in dem zweiten Zustimmungscodepuffer gespeichert ist, sowie zum Abgeben eines Codeübereinstimmungssignals, wenn die beiden Zustimmungscodes miteinander übereinstimmen,
einen Benutzerbereichspuffer (54X) zum Speichern der Startadressdaten, wenn das Gerät benutzt wird,
eine Adresskoinzidenzerfassungseinrichtung (55X) zum Vergleichen der Startadressdaten, die in dem Benutzerbereichspuffer gespeichert sind, und der Adressdaten, die von der Datenverarbeitungseinheit ausgegeben werden, sowie zum Ausgeben eines Adresskoinzidenzsignals dann, wenn die beiden Adressdaten miteinander übereinstimmen, und zum Ausgeben eines Adressabweichungssignals, wenn die beiden Adressdaten nicht miteinander übereinstimmen, und
eine logische Schaltung (53X, 56X) zum Gewähren des Lese/Schreib-Zugriffs zu dem zweiten Speicherbereich dann, wenn das Codekoinzidenzsignal und das Adresskoinzidenzsignal ausgegeben werden, sowie zum Verweigern des Lese/Schreib-Zugriffs zu dem zweiten Speicherbereich dann, wenn das Codekoinzidenzsignal nicht ausgegeben wird und das Adresskoinzidenzsignal abgegeben wird.

4. Gerät nach Anspruch 2, dadurch **gekennzeichnet,** daß die Steuereinrichtung (40X) enthält:
einen ersten Zustimmungscodepuffer (50X) zum Speichern eines Zustimmungscodes, der bereits vorab in dem Gerät eingestellt ist,
einen zweiten Zustimmungscodepuffer (52X) zum Speichern des vorbestimmten Adresscodes, wenn das Gerät benutzt wird,
eine Codekoinzidenzerfassungseinrichtung (51X) zum Vergleichen des Zustimmungscodes, der in dem ersten Zustimmungscodepuffer gespeichert ist, und des Zustimmungscodes, der in dem zweiten Zustimmungscodepuffer gespeichert ist, und zum Ausgeben eines Codekoinzidenzsignals, wenn die beiden Zustimmungscodes miteinander übereinstimmen,
einen Benutzerbereichspuffer (54X) zum Speichern der Startadressdaten, wenn das Gerät benutzt wird,
eine Adresskoinzidenzerfassungseinrichtung (55X) zum Vergleichen der Startadressdaten, die in dem Benutzerbereichspuffer gespeichert sind, und der Adressdaten, die von der Datenverarbeitungseinheit (28) ausgegeben werden, und zum Ausgeben eines Adresskoinzidenzsignals, wenn die beiden Adressdaten miteinander übereinstimmen, und zum Ausgeben eines Adressabweichungssignals, wenn die beiden Adressdaten nicht miteinander übereinstimmen, und
eine logische Schaltung (53X, 56X) zum Gewähren des Lese/Schreib-Zugriffs zu dem zweiten Speicherbereich, wenn sowohl das Codekoinzidenzsignal als auch das Adresskoinzidenzsignal ausgegeben werden, oder wenn das Adressabweichungssignal ausgegeben wird, und zum Verweigern des Lese/Schreib-Zugriffs zu dem zweiten Speicherbereich, wenn kein Codekoinzidenzsignal ausgegeben wird, und zwar selbst dann, wenn das Adresskoinzidenzsignal abgegeben wird.

5. Gerät nach Anspruch 1, dadurch **gekennzeichnet,** daß die Speichereinrichtung (29 bis 31) einen elektrisch löschbaren programmierbaren Festwertspeicher ROM für den zweiten Speicherbereich (31) enthält.

6. Gerät nach Anspruch 5, dadurch **gekennzeichnet,** daß der elektrisch löschbare programmierbare Festwertspeicher ROM das Benutzeranwendungsprogramm und eine Benutzeridentifikationsnummer speichert.

7. Gerät nach Anspruch 1, dadurch **gekennzeichnet,** daß die Speichereinrichtung (29 bis 31) einen Festwertspeicher ROM für den ersten Speicherbereich (29) enthält.

8. Gerät nach Anspruch 7, dadurch **gekennzeichnet,** daß in dem Festwertspeicher ROM das Programm zum Ausführen der Basisverarbeitungsfunktion sowie Daten, die bei der Ausführung des Programms benutzt werden, gespeichert sind.

9. Gerät nach Anspruch 1, dadurch **gekennzeichnet,** daß das Gerät einen On-Line-Modus, bei dem das im Einsatz befindliche Gerät mit einem externen Gerät (16) verbunden ist, und einen Off-Line-Modus aufweist, bei dem das Gerät für sich allein benutzt wird, und daß das Gerät in einer Chipkarte (10) eingebaut ist, die eine eingebaute Batterie (25) enthält.

10. Gerät nach Anspruch 9, dadurch **gekennzeichnet,** daß die Basisverarbeitungsfunktion eine Kredittransaktionsfunktion enthält.

11. Gerät nach Anspruch 9, dadurch **gekennzeichnet,** daß die Basisverarbeitungsfunktion eine Kalenderfunktion enthält.

12. Gerät nach Anspruch 11, das weiterhin aufweist:
eine Kalenderschaltung (33), die ein Benutzerzeitwerk, das durch einen Benutzer in gewünschter Weise eingestellt werden kann, und ein Zeitwerk enthält, das durch eine die Chipkarte (10) ausgebende Person bzw. Vorrichtung eingestellt werden kann, jedoch nicht nach Wunsch durch den Benutzer eingestellt werden kann.

13. Gerät nach Anspruch 9, dadurch **gekennzeichnet,** daß die Chipkarte (10) durch das externe Gerät (16) in dem On-Line-Modus spannungsversorgt wird und in dem Off-Line-Modus durch die eingebaute Batterie (25) mit elektrischer Leistung versorgt wird.

## Revendications

1. Dispositif électronique portatif comprenant :
une unité de traitement de données (28), qui possède une fonction de traitement de base du dispositif et une fonction de traitement d'une application d'utilisateur ;
un moyen de mémorisation (29 à 31) ayant une première zone de mémoire (29), qui est invalidée en écriture, servant à stocker un programme permettant l'exécution du traitement de base, une deuxième zone de mémoire (31), réinscriptible, comprenant une zone de stockage (31a, 31b) servant à stocker un programme d'application d'utilisateur et des données pour le programme d'application d'utilisateur, et une zone d'utilisateur (31c) servant à stocker des données du programme de base ; et
un premier moyen (50X) servant à stocker un code prédéterminé d'approbation d'accès;
caractérisé par :
un deuxième moyen (54X) servant à stocker des données indiquant ladite zone d'utilisateur (31c);
un troisième moyen (55X) servant à déterminer si des données d'adresse présentement foumies (e20X) d'une instruction d'accès concordent avec lesdites données indiquant ladite zone d'utilisateur (31c) stockées dans ledit deuxième moyen (54X);
un moyen (40X ; 51X/53X) servant à approuver un accès en lecture/ écriture à ladite deuxième zone de mémoire (31) lorsqu'il y a eu réception d'une instruction d'accès demandant de faire accès à la deuxième zone de mémoire (31) qui est une instruction d'accès prédéterminée comportant un code d'approbation d'accès qui concorde avec celui stocké dans ledit premier moyen (50X), ou bien lorsque, en réponse audit troisième moyen (55X), les données d'adresse présentement fournies de ladite instruction d'accès ne concordent pas avec lesdites données indiquant ladite zone d'utilisateur stockées dans ledit deuxième moyen (54X) ; et
un moyen (40X) servant à désapprouver l'accès en lecture/écriture à ladite deuxième zone de mémoire (31) lorsque les conditions ci-dessus indiquées ne sont pas satisfaites.

2. Dispositif selon la revendication 1, caractérisé en ce que l'instruction d'accès comporte le code prédéterminé d'approbation d'accès et les données d'adresse de début du programme servant à exécuter la fonction de traitement de base.

3. Dispositif selon la revendication 2, caractérisé en ce qu'un moyen de commande (40X) comporte :
un premier tampon de code d'approbation (50X), servant à stocker un code d'approbation positionné à l'avance dans le dispositif;
un deuxième tampon de code d'approbation (52X), servant à stocker le code d'accès prédéterminé lors de l'utilisation du dispositif;
un moyen (51X) de détection de coïncidence de codes, servant à comparer le code d'approbation stocké dans ledit premier tampon de code d'approbation et le code d'approbation stocké dans ledit deuxième tampon de code d'approbation et à délivrer, lorsque les deux codes d'approbation coïncident l'un avec l'autre, un signal de coïncidence de codes ;
un tampon de zone d'utilisateur (54X), servant à stocker les données d'adresse de début lors de l'utilisation du dispositif;
un moyen (55X) de détection de coïncidence d'adresses, servant à comparer les données d'adresse de début stockées dans ledit tampon de zone d'utilisateur et les données d'adresse délivrées par ladite unité de traitement de données, afin, lorsque les deux données d'adresse coïncident entre elles, de délivrer un signal de coïncidence d'adresses et, lorsque les deux données d'adresse ne coïncident pas l'une avec l'autre, de délivrer un signal de non-coïncidence d'adresses ; et
un circuit logique (53X, 56X), servant, lorsque le signal de coïncidence de codes et le signal de coïncidence d'adresses sont délivrés, à approuver l'accès en lecture/écriture à la deuxième zone de mémoire, et, lorsque le signal de coïncidence de codes n'est pas délivré, à désapprouver l'accès en lecture/écriture à ladite deuxième zone de mémoire lorsque le signal de coïncidence d'adresses est délivré.

4. Dispositif selon la revendication 2, caractérisé en ce qu'un moyen de commande (40X) comporte :
un premier tampon de code d'approbation (50X), servant à stocker un code d'approbation positionné à l'avance dans le dispositif ;
un deuxième tampon de code d'approbation (52X) servant à stocker le code d'accès prédéterminé lors de l'utilisation du dispositif;
un moyen (51X) de détection de coïncidence de codes, servant à comparer le code d'approbation stocké dans ledit premier tampon de code d'approbation et le code d'approbation stocké dans ledit deuxième tampon de code d'approbation et, lorsque les deux codes d'approbation coïncident entre eux, à délivrer un signal de coïncidence de codes ;
un tampon (54X) de zone d'utilisateur, servant à stocker les données d'adresse de début lors de l'utilisation du dispositif;
un moyen (55X) de détection de coïncidence d'adresses, servant à comparer les données d'adresse de début stockées dans ledit tampon de zone d'utilisateur et les données d'adresse délivrées par ladite unité de traitement de données (28), afin, lorsque les deux données d'adresse coïncident entre elles, de délivrer un signal de coïncidence d'adresses, et, lorsque les deux données d'adresse ne coïncident pas entre elles, de délivrer un signal de non-coïncidence d'adresses ; et
un circuit logique (53X, 56X) permettant, lorsque le signal de coïncidence de codes et le signal de coïncidence d'adresses sont tous deux délivrés ou lorsque le signal de non-coïncidence d'adresses est délivré, d'approuver l'accès en lecture/écriture à ladite deuxième zone de mémoire et, lorsqu'aucun signal de coïncidence de codes n'est délivré, de désapprouver l'accès en lecture/écriture à ladite deuxième zone de mémoire même lorsque le signal de coïncidence d'adresses est délivré.

5. Dispositif selon la revendication 1, caractérisé en ce que ledit moyen de mémorisation (29 à 31) comporte une mémoire morte programmable électriquement effaçable pour ladite deuxième zone de mémoire (31).

6. Dispositif selon la revendication 5, caractérisé en ce que ladite mémoire morte programmable électriquement effaçable stocke le programme d'application de l'utilisateur et un numéro d'identification de l'utilisateur.

7. Dispositif selon la revendication 1, caractérisé en ce que ledit moyen de mémorisation (29 à 31) comporte une mémoire morte pour ladite première zone de mémoire (29).

8. Dispositif selon la revendication 7, caractérisé en ce que ladite mémoire morte stocke le programme servant à l'exécution de la fonction de traitement de base, et des données utilisées lorsque le programme est exécuté.

9. Dispositif selon la revendication 1, caractérisé en ce que ledit dispositif possède un mode interactif dans lequel ledit dispositif, pendant l'utilisation, est connecté à un appareil externe (16), et un mode autonome dans lequel ledit dispositif est utilisé seul, et est assemblé en une carte à circuit intégré (10) qui incorpore une batterie incorporée (25).

10. Dispositif selon la revendication 9, caractérisé en ce que la fonction de traitement de base comporte une fonction de transaction de crédit.

11. Dispositif selon la revendication 9, caractérisé en ce que la fonction de traitement de base comporte une fonction de calendrier.

12. Dispositif selon la revendication 11, caractérisé en ce qu'il comprend en outre un circuit de calendrier (33) comportant une minuterie d'utilisateur qui peut être réglée par l'utilisateur de la manière qu'il souhaite, et une minuterie qui peut être réglée par le distributeur de ladite carte à circuit intégré (10), mais ne peut pas être réglée par l'utilisateur de la manière qu'il souhaite.

13. Dispositif selon la revendication 9, caractérisé en ce que ladite carte à circuit intégré (10) est électriquement excitée par ledit appareil externe (16) dans le mode interactif, et est électriquement excitée par la batterie incorporée (25) dans le mode autonome.
